# EUROPÄISCHE PATENTSCHRIFT

(11) **EP 2 313 673 B1**
(45) Veröffentlichungstag und Bekanntmachung des Hinweises auf die Patenterteilung: **20.06.2012**
(21) Anmeldenummer: 09777857.5
(22) Anmeldetag: 13.08.2009
(51) Int. Cl.: F16K 27/02

(54) **FLUIDWEGEVENTIL**
DIRECTIONAL CONTROL FLUID VALVE
DISTRIBUTEUR POUR FLUIDE

(30) Priorität: 13.08.2008 DE 102008039420
(43) Veröffentlichungstag der Anmeldung: 27.04.2011
(73) Patentinhaber: Prettl, Rolf, 72072 Tübingen (DE)
(72) Erfinder: DETTINGER, Jürgen, 72669 Unterensingen (DE); BORST, Peter, 88527 Unlingen-Uigendorf (DE)
(74) Vertreter: Witte, Weller & Partner
(86) Internationale Anmeldenummer: PCT/EP2009/005874
(87) Internationale Veröffentlichungsnummer: WO 2010/017980

(56) Entgegenhaltungen:
- EP-A1- 0 022 264
- WO-A1-2005/108840
- FR-A1- 2 842 225
- JP-A- 2005 169 183

## Beschreibung

Die vorliegende Erfindung betrifft ein Fluidwegeventil zum Einrichten eines ersten Durchflussweges, bei dem Fluid angesaugt und einem Verbraucher unter Druck zugeführt wird, und eines zweiten Durchflussweges, bei dem Fluid aus dem Verbraucher abgesaugt wird, mit einem Gehäuse, das einen Tankanschluss, einen Druckanschluss zur Verbindung mit einer Druckseite einer Pumpe, einen Sauganschluss zur Verbindung mit einer Saugseite der Pumpe und einen Verbraucheranschluss aufweist, und mit wenigstens einer Ventilklappe, die innerhalb des Gehäuses angeordnet und zwischen einer ersten Klappenposition zur Einrichtung des ersten Durchflussweges und einer zweiten Klappenposition zur Einrichtung des zweiten Durchflussweges bewegbar ist, wobei das Gehäuse zwei Teile aufweist, an denen jeweils wenigstens zwei Ventilsitze ausgebildet sind.

Ein derartiges Fluidwegeventil ist bekannt aus dem Dokument W02005/108840 A1.

Ein Fluidventil, das auf der Grundlage der in diesem Dokument offenbarten Prinzipien hergestellt ist, weist ein Gehäuse mit einem Grundteil auf, an dem zwei der Anschlüsse vorgesehen sind, und ein Deckelteil, an dem zwei weitere der Anschlüsse vorgesehen sind. Zwischen diesen Gehäuseteilen ist eine Zwischenplatte angeordnet, die mittels einer relativ aufwändigen Dichtung die Durchflusswege definiert.

Das bekannte Fluidwegeventil baut relativ groß und weist eine relativ hohe Anzahl an Bauteilen auf.

Demgegenüber ist es eine Aufgabe der Erfindung, ein verbessertes Fluidwegeventil anzugeben, das insbesondere kompakter bauen kann und weniger Bauteile aufweist.

Diese Aufgabe wird gemäß einem ersten Aspekt der vorliegenden Erfindung dadurch gelöst, dass das Gehäuse ein Grundteil, an dem der Tankanschluss, der Druckanschluss, der Sauganschluss und der Verbraucheranschluss ausgebildet sind, und eine Deckelteil aufweist, das geschlossene Kanäle aufweist, die mit den zugeordneten Ventilsitzen verbunden sind.

Bei dem erfindungsgemäßen Fluidwegeventil sind die Anschlüsse zum einen besser erreichbar, da sie an einem der Gehäuseteile angeordnet sind. Durch die Ausgestaltung des Deckelteils mit geschlossenen Kanälen ist zudem eine Verringerung der Bauteilanzahl möglich.

Insbesondere kann das Ventilgehäuse ausschließlich aus dem Grundteil und dem Deckelteil bestehen, wobei das Grundteil und das Deckelteil bevorzugt jeweils einstückig ausgebildet sind. Mit anderen Worten ist das Bereitstellen eines Zwischenteils zur Einrichtung der Durchflusswege nicht erforderlich, so dass auch die Abdichtung zwischen diesem Zwischenteil und dem Grundteil bzw. dem Deckelteil entfallen kann.

Die Aufgabe wird somit vollkommen gelöst.

Besonders bevorzugt ist es, wenn der Tankanschluss, der Druckanschluss, der Sauganschluss und der Verbraucheranschluss an einer Seite des Grundteils ausgebildet sind.

Hierdurch kann der Anschluss des Tankes, des Verbrauchers und der Pumpe noch weiter vereinfacht werden.

Gemäß einer weiteren bevorzugten Ausführungsform sind an der Schnittstelle zwischen dem Grundteil und dem Deckelteil ein erster und ein zweiter Ventilraum ausgebildet.

Dabei kann die Abdichtung dieser Ventilräume vorzugsweise erfolgen, wie es in der oben genannten W02005/108840 A1 offenbart ist, indem nämlich an die Ventilklappe ringförmige Ventilraumdichtungen angeformt sind.

Ferner ist es vorteilhaft, wenn an dem Grundteil ein erster Ventilsitz ausgebildet ist, der den Druckanschluss mit dem ersten Ventilraum verbindet.

Ferner ist es bevorzugt, wenn an dem Deckelteil ein zweiter Ventilsitz ausgebildet ist, der den Sauganschluss mit dem ersten Ventilraum verbindet.

Auf diese Weise kann der erste Ventilraum über den ersten und den zweiten Ventilsitz mit dem Druckanschluss oder mit dem Sauganschluss verbunden werden.

In entsprechender Weise ist es bevorzugt, wenn an dem Grundteil ein dritter Ventilsitz ausgebildet ist, der den Sauganschluss mit dem zweiten Ventilraum verbindet, und/oder wenn an den Deckelteil ein vierter Ventilsitz ausgebildet ist, der den Druckanschluss mit dem zweiten Ventilraum verbindet.

Auf diese Weise kann der zweite Ventilraum über den dritten bzw. vierten Ventilsitz entweder mit dem Sauganschluss oder mit dem Druckanschluss verbunden werden.

Zur Einrichtung der Durchflusswege ist es dabei bevorzugt, wenn die Ventilklappe einen ersten Sperrkörper aufweist, der innerhalb des Ventilraumes zwischen dem ersten und dem zweiten Ventilsitz bewegbar ist.

In entsprechender Weise ist es bevorzugt, wenn die Ventilklappe einen zweiten Sperrkörper aufweist, der innerhalb des zweiten Ventilraumes zwischen dem dritten und dem vierten Ventilsitz bewegbar ist.

Die Ventilklappe ist somit bevorzugt mit zwei Sperrkörpern ausgestattet, die innerhalb des ersten bzw. des zweiten Ventilraumes angeordnet sind und in Übereinstimmung mit Bewegungen der Ventilklappe synchron bewegt werden.

In der ersten Klappenposition, die eine Grundposition darstellt, liegen die Sperrkörper bevorzugt an dem ersten Ventilsitz bzw. dem dritten Ventilsitz dichtend an.

In der zweiten Klappenposition liegen die Sperrkörper hingegen bevorzugt an dem zweiten Ventilsitz bzw. an dem vierten Ventilsitz dichtend an.

Insgesamt ist es ferner bevorzugt, wenn die geschlossenen Kanäle jeweils eine Flussumkehrstelle aufweisen, wobei wenigstens einer der geschlossenen Kanäle mit dem Druckanschluss verbunden ist und wobei die Querschnittsfläche der Flussumkehrstelle dieses Kanals nicht größer ist als die Querschnittsfläche des von dieser Flussumkehrstelle zu einem Ventilsitz führenden Kanalabschnittes.

Im Bereich der Flussumkehrstelle wird durch das unter Druck stehende Fluid eine Kraft ausgeübt, die in Richtung eines Abhebens des Deckelteils von dem Grundteil gerichtet ist. Durch Begrenzen der Querschnittsfläche dieser Flussumkehrstelle auf ein notwendiges Maß kann diese Kraft so weit wie möglich reduziert werden. Dies führt dazu, dass der Aufwand zur Abdichtung des Grundteils gegen das Deckelteil verringert werden kann, da die in Richtung des Abhebens gerichteten Kräfte durch diese Maßnahme verringert werden können.

Gemäß einer weiteren, insgesamt bevorzugten Ausführungsform weisen die geschlossenen Kanäle jeweils eine Flussumkehrstelle auf, wobei wenigstens einer der geschlossenen Kanäle mit dem Druckanschluss verbunden ist und wobei ein von dem Druckanschluss zu der Flussumkehrstelle führender Kanalabschnitt schräg ausgerichtet ist.

Durch diese Maßnahme ist es möglich, das Fluid schräg unter einem Winkel zu der Flussumkehrstelle zu führen, so dass es möglich ist, die Querschnittsfläche der Flussumkehrstelle so weit wie möglich zu reduzieren. Dabei ist der schräge Kanalabschnitt vorzugsweise so ausgeformt, dass er unmittelbar in die Flussumkehrstelle mündet.

Dabei ist es bevorzugt, wenn der von dem Druckanschluss zu der Flussumkehrstelle führende Kanalabschnitt unter einem Winkel größer 45°, vorzugsweise größer als 60° zu einer Trennebene zwischen dem Grundteil und dem Deckelteil ausgerichtet ist.

Durch diese Maßnahme kann erreicht werden, dass die senkrecht zu der Trennebene wirkenden Kräfte, die in Richtung eines Abhebens des Deckelteils von dem Grundteil wirken, so weit wie möglich minimiert werden (die projizierte Druckfläche wird minimiert).

Ferner kann die Gehäuseform hierdurch kompakt ausgebildet werden.

Gemäß einem zweiten Aspekt der vorliegenden Erfindung wird die obige Aufgabe gelöst durch ein Fluidwegeventil, das einen ersten und einen zweiten Ventilraum aufweist, wobei eine Ventilklappe, die zwischen einer ersten und einer zweiten Klappenposition bewegbar ist, einen ersten und einen zweiten Sperrkörper aufweist, die innerhalb des ersten bzw. des zweiten Ventilraumes angeordnet sind, wobei die Sperrkörper in zumindest einer der Klappenpositionen von unterschiedlichen Seiten mit unter Druck stehendem Fluid beaufschlagbar sind und wobei die dieser Klappenposition zugeordneten Ventilsitze des ersten bzw. des zweiten Ventilraumes und/oder die Sperrkörper so ausgebildet sind, dass die Ventilklappe mittels des unter Druck stehenden Fluides in diese Klappenposition gedrückt wird.

Durch diese Ausführungsform kann erreicht werden, dass der Fluiddruck dazu verwendet wird, um die Ventilklappe in die eine Klappenposition zu drücken. Hierdurch kann die Ventilklappe sozusagen selbsthaltend in der einen Klappenposition gehalten werden, bei der es sich vorzugsweise um eine Grundposition des Fluidwegeventils handelt. Alternativ hierzu kann der Fluiddruck dazu verwendet werden, eine von einem Aktuator aufgebrachte Kraft zu unterstützen. Bevorzugt wird der Aktuator jedoch nur dazu verwendet, um die Ventilklappe in die eine Klappenposition zu bringen, wobei der Aktuator nach dem Einschalten der Pumpe ggf. abgeschaltet werden kann, da die so eingerichtete Klappenposition durch den Fluiddruck gehalten wird.

Hierbei ist es von besonderem Vorteil, wenn die Sperrkörper in der einen Klappenposition an den jeweiligen Ventilsitzen des ersten Ventilraumes bzw. des zweiten Ventilraumes anliegen, wobei die druckbeaufschlagten Flächen an diesen Ventilsitzen unterschiedlich groß sind.

Hierdurch wird der eine Sperrkörper mit einer größeren Kraft an den Ventilsitz angedrückt als die Kraft, mit der der andere Sperrkörper von dem anderen Ventilsitz weggedrückt wird. Denn die auf die Sperrkörper ausgeübte Kraft ist neben dem Druck auch von der druckbeaufschlagten Fläche abhängig.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges mit einer Harnstoffeinspritzanlage, die ein erfindungsgemäßes Fluidwegeventil aufweist, wobei das Fluidwegeventil in einer ersten Klappenposition gezeigt ist;
- Fig. 2: eine der Fig. 1 entsprechende Darstellung des Fluidwegeventils in der zweiten Klappenposition;
- Fig. 3: eine Draufsicht auf eine Ventilklappe, wie sie in dem erfindungsgemäßen Fluidwegeventil verwendbar ist;
- Fig. 4: eine Schnittansicht entlang der Linie IV-IV von Fig. 3; und
- Fig. 5: eine der Fig. 1 vergleichbare schematische Ansicht eines erfindungsgemäßen Fluidwegeventils in der ersten Klappenposition.

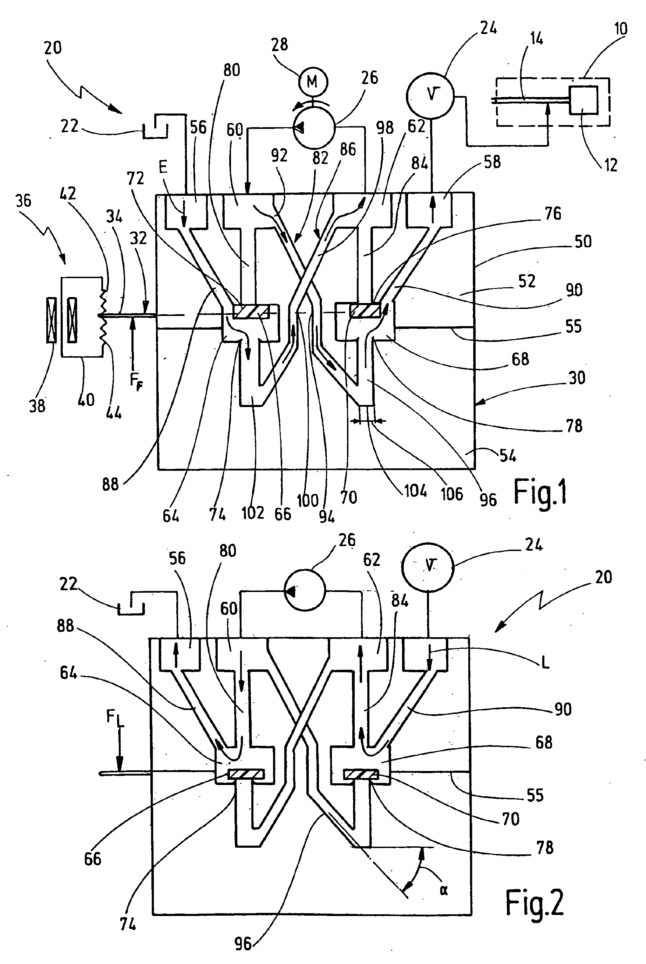

In Fig. 1 ist ein Kraftfahrzeug schematisch mit 10 bezeichnet. Das Kraftfahrzeug 10 weist einen Verbrennungsmotor 12 auf, dessen Abgase über eine Abgasanlage 14 abgeführt werden.

Dem Fahrzeug 10 ist ferner eine Harnstoffeinspritzanlage 20 zugeordnet, mittels der Harnstoff zur Stickstoffreduktion in die Abgasanlage 14 einspritzbar ist.

Die technischen Grundlagen einer solchen Harnstoffeinspritzanlage sind allgemein bekannt und werden daher vorliegend aus Gründen einer kompakten Darstellung nicht beschrieben.

Die Harnstoffeinspritzanlage 20 weist einen Harnstofftank 22 auf, in dem Harnstoff in einer größeren Menge aufnehmbar ist. Ferner weist die Harnstoffeinspritzanlage 20 ein Harnstoffeinspritzventil 24 auf, das einen Fluidverbraucher darstellt und mittels dessen der Harnstoff in die Abgasanlage 14 einspritzbar ist.

Harnstoff ist ein Fluid, das bei tiefen Temperaturen, wie sie Kraftfahrzeuge regelmäßig erfahren, gefrieren kann. Daher ist es unabdingbar, dass die Harnstoffeinspritzanlage 20 nach dem Abstellen des Verbrennungsmotors 12 entleert wird, wobei der in der Harnstoffeinspritzanlage 20 befindliche Harnstoff zurück in den Harnstofftank 22 gepumpt wird.

Zum Einspritzen des Harnstoffes mittels des Harnstoffeinspritzventils 24 wie auch zum Leersaugen der Harnstoffeinspritzanlage 20 wird eine Pumpe 26 verwendet, die vorzugsweise unidirektional ausgebildet ist. Die Pumpe 26 wird mittels eines Pumpenmotors 28 (bspw. eines elektrischen Motors) nach Bedarf angetrieben.

Um den Harnstoff zum einen unter Druck dem Harnstoffeinspritzventil 24 zuführen zu können und um den Harnstoff aus der Harnstoffeinspritzanlage 20 abpumpen zu können, ist ein Fluidwegeventil 30 vorgesehen, das vorliegend als 4/2-Wegeventil ausgebildet ist.

Das Fluidwegeventil 30 ist ferner als Klappenventil mit einer Ventilklappe 32 ausgebildet, die zwischen einer ersten Klappenposition (Grundposition), wie sie in Fig. 1 gezeigt ist, und einer zweiten Klappenposition, wie sie in Fig. 2 gezeigt ist, hin- und herbewegbar ist. Zum Hin- und Herbewegen der Ventilklappe 32 ist ein Klappenhebel 34 vorgesehen, der sich aus dem Fluidwegeventil 30 heraus erstreckt und mittels eines Ventilaktuators 36 betätigbar ist.

Der Ventilaktuator 36 weist vorzugsweise einen Elektromagnetaktuator 38 auf, der einen Anker 40 bewegen kann. Der Anker 40 ist über eine erste Feder 42 mit dem Klappenhebel 34 gekoppelt. Ferner ist der Anker 40 über eine zweite Feder 44 mit dem Klappenhebel 34 gekoppelt.

Durch die Federkopplungen wird erreicht, dass auf den Klappenhebel 34 jeweils nicht die volle Aktuatorkraft wirkt, sondern eine Kraft, die sich aus der jeweiligen Federkonstante der Federn 42, 44 ergibt. Demzufolge kann vermieden werden, dass zu hohe Kräfte auf die Ventilklappe 32 ausgeübt werden.

Das Fluidwegeventil 30 weist ein Gehäuse 50 auf, das vorzugsweise nur aus einem Grundteil 52 und aus einem Deckelteil 54 besteht. Das Grundteil 52 und das Deckelteil 54 sind über eine Trennebene 55 miteinander verbunden.

An dem Grundteil 52 ist ein Verbraucheranschluss 58 vorgesehen, der mit dem Harnstoffeinspritzventil 24 verbunden ist. Ferner sind an dem Grundteil 52 ein Druckanschluss 60 zur Verbindung mit einer Druckseite der Pumpe 26 und ein Sauganschluss 62 zur Verbindung mit einer Saugseite der Pumpe 26 vorgesehen. Schließlich ist an dem Grundteil 52 ein Tankanschluss 56 zur Verbindung mit dem Harnstofftank 22 vorgesehen.

In dem Gehäuse 50 ist ein erster Ventilraum 64 vorgesehen, innerhalb dessen ein erster Sperrkörper 66 der Ventilklappe 32 zwischen der ersten Klappenposition und der zweiten Klappenposition bewegbar ist. In dem Gehäuse 50 ist ferner ein zweiter Ventilraum 68 vorgesehen, innerhalb dessen ein zweiter Sperrkörper 70 der Ventilklappe 32 zwischen der ersten und der zweiten Klappenposition bewegbar ist. Die Ventilräume 64, 68 sind in dem Gehäuse 50 so angeordnet, dass die Trennebene 55 durch die Ventilräume 64, 68 hindurch verläuft.

Wie nachstehend noch beschrieben werden wird, sind die Sperrkörper 66, 70 beide an der Ventilklappe 32 angeformt und bewegen sich folglich synchron miteinander zwischen der ersten Klappenposition und der zweiten Klappenposition.

In dem ersten Ventilraum 64 sind ein erster Ventilsitz 72 und ein zweiter Ventilsitz 74 ausgebildet. Der erste Sperrkörper 66 ist zwischen dem ersten Ventilsitz 72 und dem zweiten Ventilsitz 74 hin- und herbewegbar. In entsprechender Weise ist in dem zweiten Ventilraum 68 ein dritter Ventilsitz 76 und ein vierter Ventilsitz 78 ausgebildet, zwischen denen der zweite Sperrkörper 70 hin- und herbewegbar ist. Der erste Ventilsitz 72 und der dritte Ventilsitz 76 sind an dem Grundteil 52 vorgesehen. Der zweite Ventilsitz 74 und der vierte Ventilsitz 78 sind an dem Deckelteil 54 vorgesehen.

Der Druckanschluss 60 ist über einen ersten Druckanschlusskanal 80 mit dem ersten Ventilsitz 72 verbunden.

Ein zweiter Druckanschlusskanal 82 verbindet den Druckanschluss 60 mit dem vierten Ventilsitz 78. Dabei verläuft der zweite Druckanschlusskanal 82 sowohl durch das Grundteil 52 als auch durch das Deckelteil 54 hindurch.

Ein erster Sauganschlusskanal 84 verbindet den Sauganschluss 62 mit dem dritten Ventilsitz 76. Ein zweiter Sauganschlusskanal 86 verbindet den Sauganschluss 62 mit dem zweiten Ventilsitz 74, wobei der zweite Sauganschlusskanal 86 sowohl durch das Grundteil 52 als auch durch das Deckelteil 54 hindurch verläuft.

Ein Tankkanal 88 verbindet den Tankanschluss 56 mit dem ersten Ventilraum 64, und zwar unabhängig von der Stellung der Sperrkörper 66, 70. Ein Verbraucherkanal 90 verbindet den Verbraucheranschluss 58 mit dem zweiten Ventilraum 68, und zwar unabhängig von der Stellung des zweiten Sperrkörpers 70.

Der zweite Druckanschlusskanal 82 weist einen ersten Verbindungskanal 92 auf, der sich schräg von dem Druckanschluss 60 zu einer ersten Übergabestelle 94 im Bereich der Trennebene 55 erstreckt. In dem Deckelteil 54 ist ein erster geschlossener Kanal 96 ausgebildet, der sich von der ersten Übergabestelle 94 zunächst in einer Richtung senkrecht zur Trennebene 55 und anschließend in einer Richtung schräg hierzu erstreckt, um anschließend zurück zu dem vierten Ventilsitz 78 zu laufen.

Der zweite Sauganschlusskanal 86 weist einen zweiten Verbindungskanal 98 auf, der sich von dem Sauganschluss 62 in einer Richtung schräg zur Trennebene 55 hin zu einer zweiten Übergabestelle 100 im Bereich der Trennebene 55 erstreckt. In dem Deckelteil 54 ist ein zweiter geschlossener Kanal 102 ausgebildet, der die zweite Übergabestelle 100 mit dem zweiten Ventilsitz 74 verbindet. Auch der zweite geschlossene Kanal 102 ist so ausgebildet, dass er ausgehend von der zweiten Übergabestelle 100 zunächst in einer Richtung senkrecht zur Trennebene 55 und anschließend schräg hierzu verläuft, wobei der zweite geschlossene Kanal 102 anschließend zurück in Richtung Trennebene 55 hin zu dem zweiten Ventilsitz 74 verläuft.

In dem ersten geschlossenen Kanal 96 steht bei Betrieb der Pumpe 26 ständig unter Druck stehendes Fluid an. Insbesondere dann, wenn der Sperrkörper 70 an dem vierten Ventilsitz 78 anliegt (siehe Fig. 2) können dabei aufgrund der Flussumkehrstelle 104, an der sich der Fluidfluss von der Trennebene 55 weg zur Trennebene 55 hin umkehrt, Axialkräfte auftreten, die das Deckelteil 54 von dem Grundteil 52 wegdrücken. Diese Axialkräfte können vorliegend jedoch dadurch begrenzt werden, dass die Flussumkehrstelle 104 des ersten geschlossenen Kanals 96 eine sehr kleine Querschnittsfläche 106 aufweist, die vorzugsweise nicht größer ist als die Querschnittsfläche des Kanalabschnittes, der die Flussumkehrstelle 104 mit dem vierten Ventilsitz 78 verbindet.

Ferner erstreckt sich der Kanalabschnitt, der von der ersten Übergabestelle 94 zu der Flussumkehrstelle 104 hinführt, in schräger Richtung so, dass er in die Flussumkehrstelle 104 mündet und somit die Fläche nicht vergrößert, auf die das unter Druck stehende Fluid wirken kann.

Hierzu ist in Fig. 2 ferner gezeigt, dass der Kanalabschnitt des geschlossenen Kanals 96, der von der Übergabestelle 94 zu der Flussumkehrstelle 104 hinführt, in Bezug auf die Trennebene 55 geneigt ist, und zwar unter einem Winkel α. Der Winkel α sollte größer sein als 45°, vorzugsweise größer als 60°.

Durch diese Maßnahme kann die Axialkraft, mit der das unter Druck stehende Fluid das Deckelteil 54 von dem Grundteil 52 wegdrückt, verringert bzw. minimiert werden.

Das Fluidwegeventil 30 kann wie folgt betrieben werden. In der in Fig. 1 gezeigten Grundstellung, in der die Ventilklappe 32 sich in der ersten Klappenposition befindet, drücken die Sperrkörper 66, 70 gegen die Ventilsitze 72, 76. Hierdurch wird der erste Ventilraum 64 mit dem Sauganschluss 62 verbunden, und der zweite Ventilraum 68 wird mit dem Druckanschluss 60 verbunden.

Bei Betrieb der Pumpe 26 kann folglich Fluid von dem Harnstofftank 22 über den Tankanschluss 56, den Tankkanal 88, den ersten Ventilraum 64, den zweiten geschlossenen Kanal 102, den zweiten Verbindungskanal 98, den Sauganschluss 62, die Pumpe 26, den Druckanschluss 60, den ersten Verbindungskanal 92, den ersten geschlossenen Kanal 96, den zweiten Ventilraum 68, den Verbraucherkanal 90 und den Verbraucheranschluss 58 dem Harnstoffeinspritzventil 24 zugeführt werden. Der oben beschriebene Durchflussweg ist in Fig. 1 mit E bezeichnet und durch entsprechende Pfeile gekennzeichnet.

Durch das Einspritzen von Harnstoff in die Abgasanlage 14 kann das Abgas gereinigt, insbesondere von Stickoxiden befreit werden. Es versteht sich, dass hierdurch Harnstoff "verbraucht" wird, so dass nach einer bestimmten Betriebsdauer ein Wiederauffüllen des Harnstofftanks 22 notwendig sein kann.

Die Pumpe 26 kann dabei einen sehr hohen Druck erzeugen, bspw. im Bereich von 9 bar, so dass der Harnstoff bei entsprechender Düsenausgestaltung mit sehr hohem Druck und folglich feiner Zerstäubung und folglich hohem Wirkungsgrad in die Abgasanlage 14 eingespritzt werden kann.

Zum Einrichten der oben beschriebenen ersten Klappenposition wird der Ventilaktuator 36 verwendet, mittels dessen auf die Ventilklappe 32 eine Kraft F_{F} ausgeübt werden kann. Wie nachstehend noch beschrieben werden wird, kann die erste Klappenposition auch selbsthaltend ausgebildet sein, wobei der von der Pumpe 26 erzeugte Fluiddruck dafür sorgt, die Ventilklappe 32 in der ersten Klappenposition zu halten.

Wenn das Fahrzeug 10 außer Betrieb gesetzt wird, ist es notwendig, die Harnstoffeinspritzanlage 20 zu entleeren und den Harnstoff zurück in den Tank 22 zu pumpen.

Zu diesem Zweck wird, wie es in Fig. 2 gezeigt ist, der Ventilaktuator 36 so betätigt, dass auf die Ventilklappe 32 eine entgegengesetzte Kraft F_{L} ausgeübt wird. Hierdurch wird die Ventilklappe 32 in die zweite Klappenposition gedrückt, in der der erste Sperrkörper 66 an dem zweiten Ventilsitz anliegt und der zweite Sperrkörper 70 an dem vierten Ventilsitz 78 anliegt. Hierdurch wird der erste Ventilraum 64 mit dem Druckanschluss 60 verbunden. Der zweite Ventilraum 68 wird mit dem Sauganschluss 62 verbunden.

Folglich kann bei Betrieb der Pumpe 26 Fluid von dem Harnstoffeinspritzventil 24 über den Verbraucheranschluss 58, den Verbraucherkanal 90, den zweiten Ventilraum 68, den ersten Sauganschlusskanal 84, den Sauganschluss 62, die Pumpe 26, den Druckanschluss 60, den ersten Druckanschlusskanal 80, den ersten Ventilraum 64, den Tankkanal 88 und den Tankanschluss 56 zurück in den Tank 22 gepumpt werden. Der hierbei eingerichtete Durchflussweg ist in Fig. 2 mit L bezeichnet und durch Pfeile gekennzeichnet.

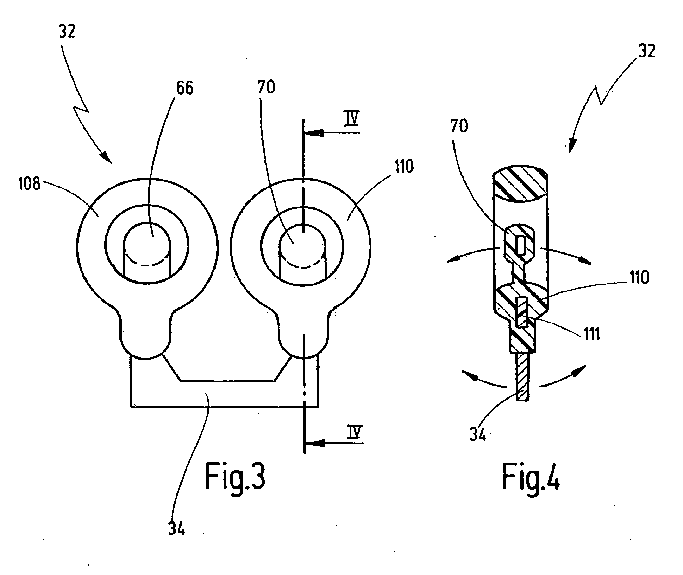

In den Figuren 3 und 4 ist schematisch eine Ventilklappe 32 gezeigt, die vorzugsweise in einem erfindungsgemäßen Fluidwegeventil 30 verwendet wird.

Die Ventilklappe 32 weist einen Klappenhebel 34 auf, der sich bspw. aus dem Gehäuse 50 heraus erstrecken kann und an dem ein Ventilaktuator 36 direkt oder mittelbar angreifen kann. Der Klappenhebel 34 weist einen ersten Steg auf, der sich in das Innere des Gehäuses 50 hinein erstreckt und an seinem Ende den ersten Sperrkörper 66 trägt. In entsprechender Weise weist der Klappenhebel 34 einen zweiten Steg auf, der sich in das Gehäuse 50 hinein erstreckt und an seinem freien Ende den zweiten Sperrkörper 70 trägt.

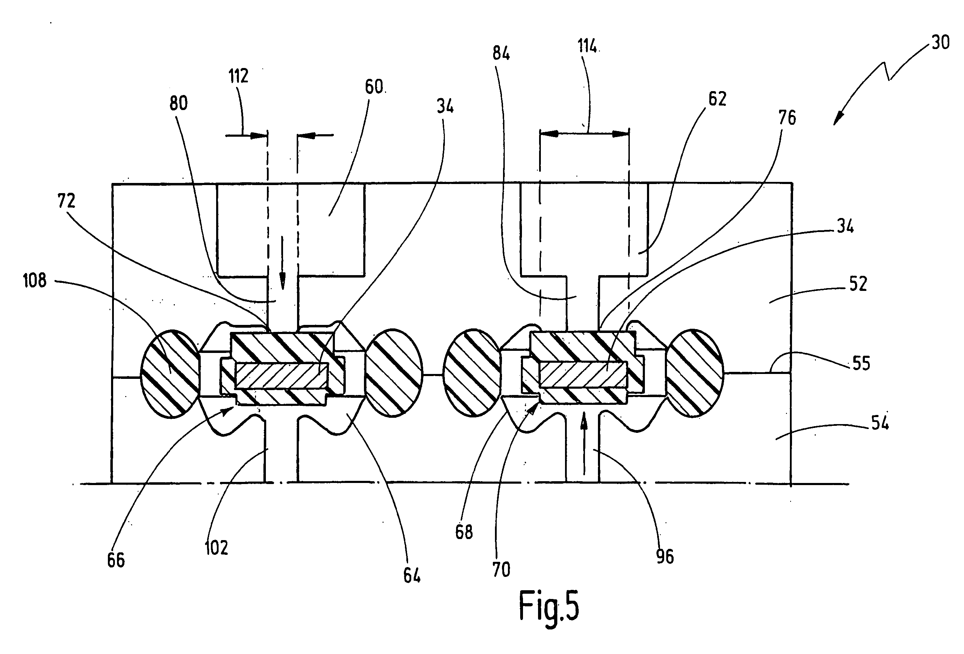

An den Klappenhebel 34 sind ferner eine erste Ventilraumdichtung 108 und eine zweite Ventilraumdichtung 110 angeformt. Die Ventilraumdichtungen 108, 110 sind jeweils ringförmig ausgebildet, so, dass sie die Ventilräume 64, 68 im Bereich der Trennebene 55 abdichten können (wie es bspw. in Fig. 5 gezeigt ist).

Die Ventilklappe 32 ist dabei so ausgebildet, dass die Sperrkörper 66, 70 synchron mit Bewegungen des sich aus dem Gehäuse 50 heraus erstreckenden Teils des Klappenhebels 34 verschwenkt werden, und zwar um eine Schwenkachse 111 herum, die in Fig. 4 gezeigt ist. Der Klappenhebel 34 ist somit als zweiseitiger Hebel um die Schwenkachse 111 herum ausgebildet. Ferner sind die Sperrkörper 66, 70 über den Klappenhebel 34 miteinander mechanisch verbunden, so dass auf den einen Sperrkörper 66 wirkende Kräfte über den Klappenhebel 34 auf den anderen Sperrkörper 70 übertragen werden und umgekehrt.

In Fig. 5 ist in schematischer Weise ein Ausschnitt eines erfindungsgemäßen Fluidwegeventils 30 gezeigt, dessen Aufbau und Funktionsweise generell dem in den Figuren 1 und 2 beschriebenen Fluidwegeventil 30 entspricht. Gleiche Elemente sind daher mit gleichen Bezugszeichen gekennzeichnet. Im Folgenden werden lediglich Unterschiede erläutert.

Die Ventilklappe 32 ist von Aufbau und Funktionsweise her ähnlich aufgebaut wie die in den Figuren 3 und 4 gezeigte Ventilklappe 32.

In Fig. 5 ist ferner gezeigt, dass der erste Ventilsitz 72 und der dritte Ventilsitz 76, an denen die Sperrkörper 66, 70 in der ersten Klappenposition anliegen, unterschiedlich ausgebildet sind. In der ersten Klappenposition (die dem Zustand der Fig. 1 entspricht) muss der erste Sperrkörper 66 den ersten Ventilsitz 72 gegen den am Druckanschluss 60 bereitgestellten Fluiddruck abdichten. Der auf den ersten Sperrkörper 66 wirkende Druck ist in Fig. 5 mit einem Pfeil gekennzeichnet. Auf den zweiten Sperrkörper 70 wirkt ein vom Betrag her gleicher Fluiddruck, jedoch in die entgegengesetzte Richtung, wie es in Fig. 5 ebenfalls durch einen Pfeil gekennzeichnet ist.

Die Ventilsitze 72, 76 sind nun unterschiedlich ausgebildet, derart, dass der auf den ersten Sperrkörper 66 wirkende Druck die erste Fläche 112 beaufschlagt, die im Wesentlichen dem Querschnitt des ersten Druckanschlusskanals 80 entspricht.

Der dritte Ventilsitz 76 ist so ausgeformt, dass der auf den zweiten Sperrkörper 70 wirkende Druck eine zweite Fläche 114 beaufschlagt, die deutlich größer ist als die erste druckbeaufschlagte Fläche 112. Da die Kraft, die auf die Sperrkörper 66, 70 ausgeübt wird, jeweils ein Produkt des Druckes mit der druckbeaufschlagten Fläche 112, 114 darstellt, wird auf die Ventilklappe 32 insgesamt eine größere Kraft in Richtung der ersten, in Fig. 5 gezeigten Klappenposition ausgeübt als in der entgegengesetzten Richtung. Da die zwei Sperrkörper 66, 70 über den Klappenhebel 34 starr miteinander verbunden sind, wird die Ventilklappe 32 folglich in der in Fig. 5 gezeigten ersten Klappenposition allein aufgrund des Fluiddruckes gehalten.

## Patentansprüche

1. Fluidwegeventil (30) zum Einrichten eines ersten Durchflussweges (E), bei dem Fluid angesaugt und einem Verbraucher (V) unter Druck zugeführt, und eines zweiten Durchflussweges (L), bei dem Fluid aus dem Verbraucher (V) abgesaugt wird, mit einem Gehäuse (50), das einen Tankanschluss (56), einen Druckanschluss (60) zur Verbindung mit einer Druckseite einer Pumpe (26), einen Sauganschluss (62) zur Verbindung mit einer Saugseite der Pumpe (26) und einen Verbraucheranschluss (58) aufweist, und mit wenigstens einer Ventilklappe (32), die innerhalb des Gehäuses (50) angeordnet und zwischen einer ersten Klappenposition zur Einrichtung des ersten Durchflussweges (E) und einer zweiten Klappenposition zur Einrichtung des zweiten Durchflussweges (L) bewegbar ist, wobei das Gehäuse (50) zwei Teile (52, 54) aufweist, an denen jeweils wenigstens zwei Ventilsitze (72-78) ausgebildet sind,
**dadurch gekennzeichnet, dass**
das Gehäuse (50) ein Grundteil (52), an dem der Tankanschluss (56), der Druckanschluss (60), der Sauganschluss (62) und der Verbraucheranschluss (58) ausgebildet sind, und ein Deckelteil (54) aufweist, das geschlossene Kanäle (96, 102) aufweist, die mit den zugeordneten Ventilsitzen (74, 78) verbunden sind.

2. Fluidwegeventil nach Anspruch 1, **dadurch gekennzeichnet, dass** der Tankanschluss (56), der Druckanschluss (60), der Sauganschluss (62) und der Verbraucheranschluss (52) an einer Seite des Grundteils (52) ausgebildet sind.

3. Fluidwegeventil nach Anspruch 1 oder 2, **dadurch gekennzeichnet, dass** ein erster und ein zweiter Ventilraum (64, 68) an der Schnittstelle zwischen dem Grundteil (52) und dem Deckelteil (54) ausgebildet sind.

4. Fluidwegeventil nach Anspruch 3, **dadurch gekennzeichnet, dass** an dem Grundteil (52) ein erster Ventilsitz (72) ausgebildet ist, der den Druckanschluss (60) mit dem ersten Ventilraum (64) verbindet.

5. Fluidwegeventil nach Anspruch 3 oder 4, **dadurch gekennzeichnet, dass** an dem Deckelteil (54) ein zweiter Ventilsitz (74) ausgebildet ist, der den Sauganschluss (62) mit dem ersten Ventilraum (64) verbindet.

6. Fluidwegeventil nach einem der Ansprüche 3 - 5, **dadurch gekennzeichnet, dass** an dem Grundteil (52) ein dritter Ventilsitz (76) ausgebildet ist, der den Sauganschluss (62) mit dem zweiten Ventilraum (68) verbindet.

7. Fluidwegeventil nach einem der Ansprüche 3 - 6, **dadurch gekennzeichnet, dass** an dem Deckelteil (54) ein vierter Ventilsitz (78) ausgebildet ist, der den Druckanschluss (60) mit dem zweiten Ventilraum (68) verbindet.

8. Fluidwegeventil nach Anspruch 4 und 5, **dadurch gekennzeichnet, dass** die Ventilklappe (32) einen ersten Sperrkörper (66) aufweist, der innerhalb des ersten Ventilraumes (64) zwischen dem ersten und dem zweiten Ventilsitz (72, 74) bewegbar ist.

9. Fluidwegeventil nach Anspruch 6 und 7, **dadurch gekennzeichnet, dass** die Ventilklappe (32) einen zweiten Sperrkörper (70) aufweist, der innerhalb des zweiten Ventilraumes (68) zwischen dem dritten und dem vierten Ventilsitz (76, 78) bewegbar ist.

10. Fluidwegeventil nach einem der Ansprüche 1 - 9, **dadurch gekennzeichnet, dass** die geschlossenen Kanäle (96, 102) jeweils eine Flussumkehrstelle (104) aufweisen, wobei wenigstens einer (96) der geschlossenen Kanäle mit dem Druckanschluss (60) verbunden ist und wobei die Querschnittfläche (106) der Flussumkehrstelle (104) dieses Kanals nicht größer ist als die Querschnittsfläche des von dieser Flussumkehrstelle zu einem Ventilsitz (78) führenden Kanalabschnittes.

11. Fluidwegeventil nach einem der Ansprüche 1 - 10, **dadurch gekennzeichnet, dass** die geschlossenen Kanäle (96, 102) jeweils eine Flussumkehrstelle (104) aufweisen, wobei wenigstens einer (96) der geschlossenen Kanäle mit dem Druckanschluss (60) verbunden ist und wobei ein von dem Druckanschluss (60) zu der Flussumkehrstelle (104) führender Kanalabschnitt schräg ausgerichtet ist.

12. Fluidwegeventil nach Anspruch 11, **dadurch gekennzeichnet, dass** der von dem Druckanschluss (60) zu der Flussumkehrstelle (104) führende Kanalabschnitt unter einem Winkel (α) größer als 45° zu einer Trennebene (55) zwischen dem Grundteil (52) und dem Deckelteil (54) ausgerichtet ist.

13. Fluidwegeventil, insbesondere nach einem der Ansprüche 1 - 12, **dadurch gekennzeichnet, dass** das Fluidwegeventil einen ersten und einen zweiten Ventilraum (64, 68) aufweist, wobei eine Ventilklappe (32), die zwischen einer ersten und einer zweiten Klappenposition bewegbar ist, einen ersten und einen zweiten Sperrkörper (66, 70) aufweist, die innerhalb des ersten bzw. des zweiten Ventilraumes (64, 68) angeordnet sind, wobei die Sperrkörper (66, 70) in zumindest einer der Klappenpositionen von unterschiedlichen Seiten mit unter Druck stehendem Fluid beaufschlagbar sind und wobei die dieser Klappenposition zugeordneten Ventilsitze (72, 76) des ersten bzw. des zweiten Ventilraumes (64, 68) und/oder die Sperrkörper (66, 70) so ausgebildet sind, dass die Ventilklappe (32) mittels des unter Druck stehenden Fluides in diese Klappenposition gedrückt wird.

14. Fluidwegeventil nach Anspruch 13, **dadurch gekennzeichnet, dass** die Sperrkörper (66, 70) in der einen Klappenposition an den jeweiligen Ventilsitzen (72, 76) des ersten Ventilraumes (64) bzw. des zweiten Ventilraumes (68) anliegen, wobei die druckbeaufschlagten Flächen (112, 114) an diesen Ventilsitzen (72, 76) unterschiedlich groß sind.

## Claims

1. A directional control fluid valve (30) for establishing a first throughflow path (E), with which fluid is sucked in and supplied under pressure to a consumer (V), and a second throughflow path (L), with which fluid is sucked out of the consumer (V), having a housing (50) which has a tank port (56), a pressure port (60) for connecting to a pressure side of a pump (26), a suction port (62) for connecting to a suction side of the pump (26), and a consumer port (58), and having at least one valve flap (32) which is arranged within the housing (50) and which can be moved between a first flap position for establishing the first throughflow path (E) and a second flap position for establishing the second throughflow path (L), with the housing (50) having two parts (52, 54) on which are formed in each case at least two valve seats (72-78),
**characterized in that**
the housing (50) has a base part (52) on which the tank port (56), the pressure port (60), the suction port (62) and the consumer port (58) are formed, and a cover part (54) which has closed ducts (96, 102) which are connected to the associated valve seats (74, 78).

2. The directional control fluid valve as claimed in claim 1, **characterized in that** the tank port (56), the pressure port (60), the suction port (62) and the consumer port (52) are formed on one side of the base part (52).

3. The directional control fluid valve as claimed in claim 1 or 2, **characterized in that** a first and a second valve chamber (64, 68) are formed at the interface between the base part (52) and the cover part (54).

4. The directional control fluid valve as claimed in claim 3, **characterized in that** a first valve seat (72) which connects the pressure port (60) to the first valve chamber (64) is formed on the base part (52).

5. The directional control fluid valve as claimed in claim 3 or 4, **characterized in that** a second valve seat (74) which connects the suction port (62) to the first valve chamber (64) is formed on the cover part (54).

6. The directional control fluid valve as claimed in one of claims 3 to 5, **characterized in that** a third valve seat (76) which connects the suction port (62) to the second valve chamber (68) is formed on the base part (52).

7. The directional control fluid valve as claimed in one of claims 3 to 6, **characterized in that** a fourth valve seat (78) which connects the pressure port (60) to the second valve chamber (68) is formed on the cover part (54).

8. The directional control fluid valve as claimed in claims 4 and 5, **characterized in that** the valve flap (32) has a first blocking body (66) which is movable within the first valve chamber (64) between the first and the second valve seat (72, 74).

9. The directional control fluid valve as claimed in claims 6 and 7, **characterized in that** the valve flap (32) has a second blocking body (70) which is movable within the second valve chamber (68) between the third and the fourth valve seat (76, 78).

10. The directional control fluid valve as claimed in one of claims 1 to 9, **characterized in that** the closed ducts (96, 102) have in each case one flow reversal point (104), with at least one (96) of the closed ducts being connected to the pressure port (60) and with the cross-sectional area (106) of the flow reversal point (104) of said duct being no larger than the cross-sectional area of the duct section which leads from said flow reversal point to a valve seat (78).

11. The directional control fluid valve as claimed in one of claims 1-10, **characterized in that** the closed ducts (96, 102) have in each case one flow reversal point (104), with at least one (96) of the closed ducts being connected to the pressure port (60), and with a duct section which leads from the pressure port (60) to the flow reversal point (104) being aligned obliquely.

12. The directional control fluid valve as claimed in claim 11, **characterized in that** the duct section which leads from the pressure port (60) to the flow reversal point (104) being aligned at an angle (α) of greater than 45° with respect to a parting plane (55) between the base part (52) and the cover part (54).

13. A directional control fluid valve in particular as claimed in one of claims 1 to 12, **characterized in that** the directional control fluid valve has a first and a second valve chamber (64, 68), with a valve flap (32) which is movable between a first and a second flap position and which has a first and second blocking body (66, 70), which blocking bodies (66, 70) are arranged within the first and second valve chambers (64, 68) respectively, with it being possible, in at least one of the flap positions, for the blocking bodies (66, 70) to be acted on with pressurized fluid from different sides, and with the valve seats (72, 76), which are assigned to said flap position, of the first and second valve chambers (64, 68) respectively and/or the blocking bodies (66, 70) being designed such that the valve flap (32) is pushed into said flap position by means of the pressurized fluid.

14. The directional control fluid valve as claimed in claim 13, **characterized in that**, in said one flap position, the blocking bodies (66, 70) bear against the respective valve seats (72, 76) of the first valve chamber (64) and of the second valve chamber (68) respectively, wherein the areas (112, 114), which are subjected to pressure loading, on said valve seats (72, 76) are of different sizes.

## Revendications

1. Distributeur pour fluide (30) destiné à ajuster une première voie d'écoulement (E), dans laquelle du fluide est aspiré et est acheminé sous pression à un consommateur (V), et une deuxième voie d'écoulement (L), dans laquelle du fluide est aspiré depuis le consommateur (V), comprenant un boîtier (50) qui présente un raccord de réservoir (56), un raccord de pression (60) pour la connexion à un côté de pression d'une pompe (26), un raccord d'aspiration (62) pour la connexion à un côté d'aspiration de la pompe (26) et un raccord de consommateur (58), et comprenant au moins un clapet de soupape (32) qui est disposé à l'intérieur du boîtier (50) et qui peut être déplacé entre une première position de clapet pour ajuster la première voie d'écoulement (E) et une deuxième position de clapet pour ajuster la deuxième voie d'écoulement (L), le boîtier (50) présentant deux parties (52, 54), au niveau desquelles sont réalisés à chaque fois au moins deux sièges de soupape (72-78),
**caractérisé en ce que**
le boîtier (50) présente une partie de base (52) au niveau de laquelle le raccord de réservoir (56), le raccord de pression (60), le raccord d'aspiration (62) et le raccord de consommateur (58) sont réalisés, et une partie de couvercle (54), qui présente des canaux fermés (96, 102) qui sont connectés aux sièges de soupape associés (74, 78).

2. Distributeur pour fluide selon la revendication 1, **caractérisé en ce que** le raccord de réservoir (56), le raccord de pression (60), le raccord d'aspiration (62) et le raccord de consommateur (52) sont réalisés sur un côté de la partie de base (52).

3. Distributeur pour fluide selon la revendication 1 ou 2, **caractérisé en ce qu'**un premier et un deuxième espace de soupape (64, 68) sont réalisés au niveau de l'interface entre la partie de base (52) et la partie de couvercle (54).

4. Distributeur pour fluide selon la revendication 3, **caractérisé en ce qu'**un premier siège de soupape (72) est réalisé au niveau de la partie de base (52), lequel relie le raccord de pression (60) au premier espace de soupape (64).

5. Distributeur pour fluide selon la revendication 3 ou 4, **caractérisé en ce qu'**un deuxième siège de soupape (74) est réalisé au niveau de la partie de couvercle (54), lequel relie le raccord d'aspiration (62) au premier espace de soupape (64).

6. Distributeur pour fluide selon l'une quelconque des revendications 3 à 5, **caractérisé en ce qu'**un troisième siège de soupape (76) est réalisé au niveau de la partie de base (52), lequel relie le raccord d'aspiration (62) au deuxième espace de soupape (68).

7. Distributeur pour fluide selon l'une quelconque des revendications 3 à 6, **caractérisé en ce qu'**un quatrième siège de soupape (78) est réalisé au niveau de la partie de couvercle (54), lequel relie le raccord de pression (60) au deuxième espace de soupape (68).

8. Distributeur pour fluide selon les revendications 4 et 5, **caractérisé en ce que** le clapet de soupape (32) présente un premier corps de verrouillage (66), qui peut être déplacé à l'intérieur du premier espace de soupape (64) entre le premier et le deuxième siège de soupape (72, 74).

9. Distributeur pour fluide selon les revendications 6 et 7, **caractérisé en ce que** le clapet de soupape (32) présente un deuxième corps de verrouillage (70) qui peut être déplacé à l'intérieur du deuxième espace de soupape (68) entre le troisième et le quatrième siège de soupape (76, 78).

10. Distributeur pour fluide selon l'une quelconque des revendications 1 à 9, **caractérisé en ce que** les canaux fermés (96, 102) présentent à chaque fois un point d'inversion du flux (104), au moins l'un (96) des canaux fermés étant connecté au raccord de pression (60) et la surface en section transversale (106) du point d'inversion de flux (104) de ce canal n'étant pas supérieure à la surface en section transversale de la portion de canal conduisant de ce point d'inversion de flux à un siège de soupape (78).

11. Distributeur pour fluide selon l'une quelconque des revendications 1 à 10, **caractérisé en ce que** les canaux fermés (96, 102) présentent à chaque fois un point d'inversion de flux (104), au moins l'un (96) des canaux fermés étant connecté au raccord de pression (60) et une portion de canal conduisant depuis le raccord de pression (60) jusqu'au point d'inversion de flux (104) étant orientée obliquement.

12. Distributeur pour fluide selon la revendication 11, **caractérisé en ce que** la portion de canal conduisant depuis le raccord de pression (60) jusqu'au point d'inversion de flux (104) est orientée suivant un angle (α) supérieur à 45° par rapport à un plan de séparation (55) entre la partie de base (52) et la partie de couvercle (54).

13. Distributeur pour fluide, en particulier selon l'une quelconque des revendications 1 à 12, **caractérisé en ce que** le distributeur pour fluide présente un premier et un deuxième espace de soupape (64, 68), un clapet de soupape (32), qui peut être déplacé entre une première et une deuxième position de clapet, présentant un premier et un deuxième corps de verrouillage (66, 70), qui sont disposés à l'intérieur du premier, respectivement du deuxième espace de soupape (64, 68), les corps de verrouillage (66, 70) pouvant être sollicités dans au moins l'une des positions du clapet depuis des côtés différents avec du fluide sous pression et les sièges de soupape (72, 76) associés à cette position de clapet du premier, respectivement du deuxième espace de soupape (64, 68) et/ou les corps de verrouillage (66, 70) étant réalisés de telle sorte que le clapet de soupape (32) soit pressé au moyen du fluide sous pression dans cette position de clapet.

14. Distributeur pour fluide selon la revendication 13, **caractérisé en ce que** les corps de verrouillage (66, 70) se situent dans l'une des positions de clapet au niveau des sièges de soupape respectifs (72, 76) du premier espace de soupape (64) ou du deuxième espace de soupape (68), les surfaces sollicitées en pression (112, 114) au niveau de ces sièges de soupape (72, 76) étant de dimensions différentes.
